# EUROPÄISCHE PATENTSCHRIFT

(11) **EP 1 472 114 B1**
(45) Veröffentlichungstag und Bekanntmachung des Hinweises auf die Patenterteilung: **19.04.2006**
(21) Anmeldenummer: 03704281.9
(22) Anmeldetag: 03.02.2003
(51) Int. Cl.: B60R 11/02

(54) **HALTEVORRICHTUNG FÜR EIN ELEKTRONISCHES GERÄT**
HOLDER FOR AN ELECTRONIC DEVICE
DISPOSITIF PORTEUR CONNU POUR UN APPAREIL ELECTRONIQUE

(30) Priorität: 06.02.2002 DE 10204887
(43) Veröffentlichungstag der Anmeldung: 03.11.2004
(73) Patentinhaber: BenQ Corporation, Gueishan Taoyuan 333 (TW)
(72) Erfinder: TEMPLIN, Frank, 81379 München (DE); LANGE, Thorsten, 87719 Mindelheim (DE)
(74) Vertreter: Aufhauser, Christoph
(86) Internationale Anmeldenummer: PCT/DE2003/000301
(87) Internationale Veröffentlichungsnummer: WO 2003/066381

(56) Entgegenhaltungen:
- EP-A- 0 831 667
- WO-A-01/61875
- WO-A-95/28789
- DE-C- 19 850 044
- US-B1- 6 341 218

## Beschreibung

Die Erfindung betrifft eine Haltevorrichtung für ein elektronisches Gerät mit einer für das elektronische Gerät individualisierten Aufnahmeeinrichtung und einer Basiseinrichtung.

Individualisierte Haltevorrichtungen für elektronische Geräte sind aus dem Stand der Technik bekannt. So beschreibt beispielsweise die deutsche Patentschrift DE 198 50 044 C1 eine Mobiltelefonhalterung für ein Fahrzeug, welche ein Grundteil zur permanenten Befestigung im Fahrzeug und ein Mobiltelefonhalteteil aufweist, das am Grundteil befestigt werden kann. Über ein mit dem Mobiltelefonhalteteil fest verbundenes Anschlusskabel ist das Mobiltelefon mit dem elektrischen Bordnetz des Fahrzeugs und der Telefonantenne des Fahrzeugs verbunden. Diese elektrische Verbindung zum Bordnetz des Fahrzeugs und zur Antenne muss fest installiert werden und wird üblicherweise von entsprechenden Fachleuten, wie Kfz-Werkstätten oder Kfz-Elektrikausrüstern, vorgenommen. Ein Nachteil der dargestellten Mobiltelefonhalterung für ein Fahrzeug ist, dass, wenn der Fahrzeughalter ein Mobiltelefon anderen Typs verwenden möchte, welches aufgrund seiner anderen Bauart nicht mehr in das ursprüngliche Mobiltelefonhalteteil passt, er ein neues Mobiltelefonhalteteil verwenden muss. Dieses muss erneut von Fachleuten an die entsprechende Kfz-Elektrik angeschlossen werden. Dies bedeutet eine Erschwernis beim Wechsel des Mobiltelefons und dem sich daraus ergebenden Wechsel der Halterung. Ein paralleles Benutzen mehrerer verschiedener Mobiltelefone ist in einem Kraftfahrzeug ist unmöglich, sofern sie nicht in dieselbe Halterung passen. Eine vergleichbare Haltevorrichtung ist auch aus der Europäischen Offenlegungsschrift EP 0 831 667 bekannt.

Weiterhin sind aus den PCT Veröffentlichungsschriften WO 95/28789, welche als nächstkommend anzusehen ist, und WO 01/61875 sowie aus der US Patentschrift US 6,341,218 Haltevorrichtungen für Mobiltelefone bekannt, welche ebenfalls ein Grundteil zur permanenten Befestigung im Fahrzeug und ein Mobiltelefonhalteteil aufweist, das am Grundteil befestigt werden kann. Die elektrische Verbindung zwischen Mobiltelefon und dem elektrischen Bordnetz erfolgt in diesem Fall über einen Stecker im Mobiltelefonhalteteil, durch welchen dann unter Verwendung eines Verbindungskabels und/oder Verbindungssteckers ein elektrische Verbindung zum Grundteil und von dort zur KFZ-Elektrik hergestellt werden kann.

Weiterhin ist aus der schwedischen Patentanmeldung SE 98 02 106 A ein zweiteiliger Halter für ein Mobiltelefon bekannt, welches ein an die Form des Mobiltelefons angepasstes, sogenanntes "Cradle" und einen in einem Fahrzeug befestigbaren Halter aufweist. Durch Befestigen des Cradles am Halter wird die komplette Haltevorrichtung zusammengebaut. Ist der Halter im Fahrzeug befestigt, so lässt sich durch Einbringen des Mobiltelefons in das Cradle dieses im Fahrzeug fixieren. Die Anpassung an verschiedene Mobiltelefonmodelle erfolgt durch Austauschen des Cradles, während der Halter fest im Fahrzeug fixiert werden kann. Nachteil dieser Lösung ist, dass zusätzliche Leitungen zur elektrischen Verbindung des Mobiltelefons mit externen Einrichtungen wie beispielsweise Lautsprechern oder Antennen nötig sind, die sich im Fahrzeug nicht festgelegten Orten befinden, wenn das Mobiltelefon nicht benutzt wird. Wird das Mobiltelefon in den Halter eingebaut und soll mit den externen elektrischen Einrichtungen verbunden werden, muss das entsprechende Kabel erst gesucht werden und der zugehörige Stecker dann mit dem Mobiltelefon verbunden werden. Letzteres kann aufgrund der geringen Abmessungen der üblichen Steckverbindungen zeitaufwendig sein.

Es ist daher Aufgabe der vorliegenden Erfindung, eine Haltevorrichtung für ein elektronisches Geräte zur Verfügung zu stellen, welche eine leicht herstellbare elektrische Verbindung des elektronischen Geräte mit einer externen elektrischen Einrichtung ermöglicht und die einfach an unterschiedliche elektronische Geräte anpassbar ist.

Diese Aufgabe wird gelöst durch eine Haltevorrichtung gemäß Anspruch 1 für ein elektronisches Gerät mit einem elekrischen Geräte-Verbindungselement, umfassend
- eine für das elektronische Gerät individualisierten Aufnahmeeinrichtung,
- eine Basiseinrichtung mit einem in dieser integrierten und von der Aufnahmeeinrichtung unabhängigen elektrischen Verbindungselement zur unmittelbaren Verbindung mit dem elektrischen Geräte-Verbindungselement zum Herstellen einer elektrischen Verbindung zwischen dem elektronischen Gerät und einer elektrischen Einrichtung,
- Befestigungsmitteln zum Herstellen einer lösbaren mechanischen Verbindung zwischen der Basiseinrichtung und der Aufnahmeeinrichtung.

Die Verwendung von für ein elektronisches Gerät beziehungsweise eine Geräteserie individualisierten Aufnahmeeinrichtungen ermöglicht es, die Haltevorrichtung an verschiedene elektronische Geräte beziehungsweise Geräteserien anzupassen. Da die Basiseinrichtung ein von der Aufnahmeeinrichtung unabhängiges elektrisches Verbindungselement aufweist, welches seine Position unabhängig von der verwendeten Aufnahmeeinrichtung beibehält, brauchen die elektrischen Verbindungselemente zwischen der Basiseinrichtung und einer externen elektrischen Einrichtung beim Wechsel der Aufnahmeeinrichtung nicht verändert werden.

Die Unabhängigkeit des elektrischen Verbindungselements von der Aufnahmeeinrichtung bedeutet in diesem Zusammenhang, dass die Form und die Position des elektrischen Verbindungselements der Basiseinrichtung unabhängig von der Lage der Aufnahmeeinrichtung relativ zur Basiseinrichtung sind. Das bedeutet beispielsweise, dass beim Entfernen der Aufnahmeeinrichtung von der Basiseinrichtung das elektrische Verbindungselement seine Form und seine Position unverändert beibehält.

Mit Hilfe der Befestigungsmittel können Aufnahmeeinrichtung und Basiseinrichtung mechanisch verbunden werden, wonach sich die Haltevorrichtung im gebrauchsfertigen Zustand befindet. Die Befestigungsmittel müssen eine dauerhafte Verbindung zwischen Aufnahmeeinrichtung und Basiseinrichtung gewährleisten. Diese Verbindung ist reversibel und jederzeit mit vergleichsweise einfachem Aufwand lösbar, um bei Verwendung eines anderen elektronischen Gerätes eine für dieses individualisierte Aufnahmeeinrichtung mit der Basiseinrichtung verbinden zu können.

Die erfindungsgemäße Haltevorrichtung verbindet somit den Vorteil einer einfachen Anpassbarkeit der Haltevorrichtung an verschiedene elektronische Geräte mit dem weiteren Vorteil, dass bei Verwendung verschiedener Aufnahmeeinrichtungen die an/in der Basiseinrichtung befindlichen elektrischen Verbindungselemente zum Herstellen elektrischer Verbindungen zwischen dem elektronischen Gerät und externen elektrischen Einrichtungen unverändert bleiben können.

Eine vorteilhafte Ausgestaltung der Erfindung ergibt sich, wenn die Befestigungsmittel das elektrische Verbindungselement derart fixieren, dass für das elektronische Gerät beim Erreichen einer vorbestimmten Halteposition eine elektrische Verbindung herbeigeführt ist. Die vorbestimmte Halteposition ist dabei im allgemeinen diejenige Position, in welcher das elektronische Gerät sich befindet, wenn es in die Haltevorrichtung eingebracht wurde und dort zum Gebrauch oder zur Verwahrung für eine gewisse Zeit verbleiben soll. Im allgemeinen wird das elektronische Gerät durch spezielle Halteelemente, wie Klammern, Vorsprünge oder Rasten in dieser Position gehalten. Bei der erfindungsgemäßen Haltevorrichtung werden sich diese Halteelemente hauptsächlich an der individualisierten Aufnahmeeinrichtung befinden, da diese Halteelemente im allgemeinen an Form und Funktion des elektronischen Geräts angepasst sind.

Diese Ausführungsform der erfindungsgemäßen Haltevorrichtung hat den Vorteil, dass beim Einbringen des Gerätes in die Haltevorrichtung kein zusätzlicher Aufwand betrieben werden muss, um die elektrische Verbindung herbeizuführen. Beim Einrasten des elektronischen Geräts in die Haltevorrichtung ist automatisch die elektrische Verbindung herbeigeführt. Dabei wird beispielsweise das manuelle Einstecken eines Steckers vermieden und somit die Benutzerfreundlichkeit der Haltevorrichtung erhöht.

Vorteilhafterweise handelt es sich bei den Befestigungsmitteln zum Herstellen einer lösbaren mechanischen Verbindung zwischen der Basiseinrichtung und der Aufnahmeeinrichtung um mechanische Mittel, wie z.B. Schrauben, Rasten, Nuten, Verzahnung oder Kombinationen davon. So können beispielsweise die Aufnahmeeinrichtung und die Basiseinrichtung derart ausgebildet sein, dass einer entsprechenden Form von Bereichen der einen Einrichtung eine komplementäre Form von Bereichen der anderen Einrichtung entspricht, wodurch mit dem Zusammenbringen der Aufnahmeeinrichtung und der Basiseinrichtung ein Kraftschluss zwischen beiden herbeigeführt wird, der diese verbindet. So kann beispielsweise die Basiseinrichtung mit einem T-förmigen, länglichen Vorsprung versehen sein, dem eine komplementär ausgeformte Nut in der Aufnahmeeinrichtung entgegensteht. Zur zusätzlichen Fixierung der Basiseinrichtung relativ zur Aufnahmeeinrichtung kann beispielsweise auch eine oder mehrere Rasten oder eine oder mehrere Schrauben oder Kombinationen davon vorgesehen sein. Letztendlich sind als Befestigungsmittel vorteilhafterweise alle mechanischen Mittel geeignet, welche einen Kraftschluss zwischen Aufnahmeeinrichtung und Basiseinrichtung bewirken. Außer mechanischen Befestigungsmitteln zum Herstellen einer lösbaren mechanischen Verbindung zwischen der Basiseinrichtung und der Aufnahmeeinrichtung sind unter Umständen auch auf magnetischen Kräften basierende Befestigungsmittel oder andere Befestigungsmittel wie beispielsweise Klettverschlüsse verwendbar.

Zur einfacheren Einbringung und stabileren Fixierung des elektronischen Gerätes in der Haltevorrichtung ist es vorteilhaft, wenn die Aufnahmeeinrichtung zumindest abschnittsweise eine Form aufweist, die komplementär zur äußeren Form zumindest eines Bereichs des elektronischen Gerätes ist. Durch eine solche Formgebung sieht ein Benutzer der Aufnahmeeinrichtung schon vor Einbringen des elektronischen Gerätes an, wo dessen Platz in der Aufnahmeeinrichtung ist. Dadurch kann das elektronische Gerät einfacher und schneller in die Haltevorrichtung eingebracht werden. Außerdem wird durch eine solche Formanpassung die Position des elektronischen Geräts in der vorbestimmten Halteposition noch besser fixiert. Dadurch ergibt sich eine robustere und gegen Erschütterungen unempfindlichere Halterung des elektronischen Geräts.

Die erfindungsgemäße Haltevorrichtung lässt sich vorteilhaft zur Aufnahme auch kleinerer elektronischer Geräte nutzen. Da solche Geräte im allgemeinen auch entsprechend kleine Bedienelemente haben, kann es vorteilhaft sein, wenn die Basiseinrichtung Mittel zur Bedienung des elektronischen Geräts umfasst. Dies erleichtert die Bedienung des elektronischen Gerätes, wenn es sich in der Haltevorrichtung befindet. Bei Verwendung unterschiedlicher elektronischer Geräte mit derselben Haltevorrichtung können dieselben Bedienungsmittel an der Basiseinrichtung unter Umständen jeweils verschiedene Funktionen der verschiedenen elektronischen Geräts steuern.

Die Anpassung der erfindungsgemäßen Haltevorrichtung an verschiedene elektronische Geräte wird weiterhin erleichtert, wenn die Haltevorrichtung zusätzlich einen Adapter zum Herstellen der elektrischen Verbindung zwischen dem elektronischen Gerät und dem elektrischen Verbindungselement umfasst. Im Falle von Steckverbindungen kann es sich dabei beispielsweise um einen Umstecker von einem als Stecker ausgebildeten elektrischen Verbindungselement an der Basiseinrichtung und dem entsprechenden Gegenstück am elektronischen Gerät handeln. Der Adapter kann in diesem Fall beispielsweise direkt auf das elektrische Verbindungselement aufgesteckt werden. Weiterhin ist es möglich, den Adapter in die Aufnahmeeinrichtung zu integrieren, wobei der Adapter dann derart an der Aufnahmeeinrichtung angebracht sein muss, dass, wenn Aufnahmeeinrichtung und Basiseinrichtung verbunden sind und das elektronische Gerät in die Haltevorrichtung eingebracht wurde, der Adapter mit dem elektrischen Verbindungselement und dem elektronischen Gerät in Kontakt steht. Auf diese Weise kann die Anpassung der Haltevorrichtung an verschiedene elektronische Geräte noch flexibler gestaltet werden. Diese Ausführungsform ermöglicht die Verwendung verschiedener elektronischer Geräte mit der erfindungsgemäßen Haltevorrichtung auch dann, wenn die unterschiedlichen elektronischen Geräte über verschieden ausgelegte elektrische Anschlüsse verfügen.

Vorteilhafterweise eignet sich die erfindungsgemäße Haltevorrichtung zur Verbindung eines elektronischen Geräts mit einer externen Steuereinrichtung. Dabei kann es sich beispielsweise um eine Einrichtung zur Steuerung von Funktionen des elektronischen Gerätes oder an die Steuereinrichtung angeschlossene Zusatzgeräte handeln. Solche Steuereinrichtungen können beispielsweise Computer sein, welche mit dem elektronischen Gerät Daten austauschen oder Daten mit auf dem elektronischen Gerät abgespeicherte Daten abgleichen. Weiterhin kann die Steuereinrichtung beispielsweise mit externen Ein- und/oder Ausgabemodulen für das elektronische Gerät verbunden sein und zum Beispiel die Ausgabe von Daten als Zeichen, Bilder und/oder Töne steuern.

Die mit.dem elektronischen Gerät verbindbare elektrische Einrichtung kann auch eine Stromversorgungseinrichtung sein, durch welche das elektronische Gerät beispielsweise mit elektrischer Energie versorgt wird oder/und, im Falle eines batteriebetriebenen Geräts, die Akkus wieder aufgeladen werden können.

Die Haltevorrichtung eignet sich vorteilhafterweise zur Aufnahme von elektronischen Geräten, die Datenverarbeitungseinrichtungen oder Ein- und/oder Ausgabemodule von Datenverarbeitungseinrichtungen sind. Solche Datenverarbeitungseinrichtungen können z.B. Organizer oder Personal Digital Assistants (PDAs) sein. Ein- und/oder Ausgabemodule von Datenverarbeitungseinrichtungen können Touchscreens, Bildschirme oder integrierte Ein-Ausgabegeräte für Computer sein.

Weiterhin kann das elektronische Gerät vorteilhafterweise zumindest einen Teil eines mobilen Telekommunikationsendgeräts umfassen. Dabei kann es sich beispielsweise um ein Telekommunikationsendgerät als solches, einen Teil eines mobilen Telekommunikationsendgerätes oder ein Gerät handeln, welches ein mobiles Telekommunikationsmodul umfasst. Im Rahmen dieser Ausgestaltung der erfindungsgemäßen Haltevorrichtung kann es sinnvoll sein, dass die mit dem Telekommunikationsgerät verbindbare elektrische Einrichtung eine Antenneneinrichtung umfasst.

Sowohl bei den genannten Organizern und PDAs als auch bei den mobilen Telekommunikationsendgeräten handelt es sich um elektronische Geräte, die eigentlich immer mit dem Benutzer mitgeführt werden. Da diese Geräte häufig mit Akkus betrieben werden, ist eine Halterung mit einem elektrischen Anschluss zum Aufladen der Akkus sehr vorteilhaft. Weiterhin ist es oft notwendig, in den Organizern, PDAs und mobilen Telekommunikationsendgeräten gespeicherte Informationen mit auf externen Computern gespeicherten Daten wie zum Beispiel Adressen, Telefonnummern, Terminen oder Aufgaben (To-Do-Listen) abzugleichen. Auch dieser Abgleich kann über das an der erfindungsgemäßen Haltevorrichtung angebrachte Verbindungselement erfolgen.

Die derzeit sehr raschen Innovationszyklen von oft nur einem halben Jahr oder einem Jahr bei den vorstehend genannten elektronischen Geräten machen einen häufigen Wechsel der Geräte notwendig, um mit jeweils auf dem aktuellen Stand befindlichen Geräten arbeiten zu können. Dabei ist es allerdings nicht gewünscht, die häufig fest installierten Verbindungen zu den genannten externen elektrischen Einrichtungen jedes mal wieder neu installieren zu müssen. Hier bietet die erfindungsgemäße Haltevorrichtung den Vorteil, an jeweils neue Geräte anpassbar zu sein, ohne die elektrischen Verbindungselemente zu externen elektrischen Einrichtungen verändern zu müssen.

Wenn das für die Haltevorrichtung vorgesehene elektronische Gerät zumindest einen Teil eines mobilen Telekommunikationsendgeräts umfasst, kann es weiterhin vorteilhaft sein, dass die Haltevorrichtung ein zweites elektrisches Verbindungselement zum Herstellen einer elektrischen Verbindung zwischen dem elektronischen Gerät und einer Antenneneinrichtung umfasst. So kann beispielsweise bei Verwendung eines Telekommunikationsendgerätes, welches in die Haltevorrichtung eingebracht wurde, das elektrische Verbindungselement eine Verbindung zwischen dem Telekommunikationsendgerät und einer Stromversorgungseinrichtung und/oder einer Steuereinheit für beispielsweise einen Lautsprecher herstellen. Die Ankopplung des Telekommunikationsendgerätes an eine externe Antenne kann dann zum Beispiel über das zweite elektrische Verbindungselement erfolgen. Auf diese Weise lassen sich an bestimmten Orten installierte Lautsprecher, zum Beispiel als Freisprecheinrichtungen in Fahrzeugen oder in Konferenzräumen, und Antennen vorteilhaft nutzen.

Damit die Basiseinrichtung z.B. an einer Wand oder an einem beliebigen Gegenstand befestigt werden kann, umfasst die Basiseinrichtung der erfindungsgemäßen Haltevorrichtung vorteilhafterweise weiterhin Mittel zur Fixierung an einem Träger. Damit kann die Haltevorrichtung besonders flexibel im Umfeld des Benutzers angebracht werden. Die Fixierung der Basiseinrichtung führt dazu, dass die Haltevorrichtung beispielsweise beim Einbringen des elektronischen Gerätes nicht wackelt oder verrutscht und erhöht so die Bedienerfreundlichkeit der Haltevorrichtung. Die Mittel zur Fixierung der Basiseinrichtung an dem Träger können Schrauben, Klebemittel, Haken, Magnete oder ähnliche Befestigungsmittel sein.

Die erfindungsgemäße Haltevorrichtung lässt sich vorteilhaft in einem Kraftfahrzeug verwenden, wobei der erwähnte Träger dann ein Bauteil des Kraftfahrzeugs ist. Speziell bei Kraftfahrzeugen stellt sich das Problem, dass elektronische Geräte beim Aufenthalt im Kraftfahrzeug an externe elektrische Einrichtungen wie Stromversorgungseinrichtungen (zum Laden der Akkus), Antennen (zur Reduktion der elektronmagnetischen Abstrahlung am Kopf des Benutzers) oder Steuereinrichtungen (Freisprecheinrichtung, z.B. gekoppelt an ein Autoradio (Stummschaltung)) angeschlossen werden sollen. Beim Verlassen des Fahrzeugs muss es aber möglich sein, das elektronische Gerät einfach mitzuführen. Genauso sollte beim Betreten des Fahrzeugs sich das elektronische Gerät einfach, im Wesentlichen mit einem Handgriff, in die Haltevorrichtung einbringen lassen, womit gleichzeitig auch der Kontakt zu den externen elektrischen Einrichtungen hergestellt werden sollte. Die erfindungsgemäßen Haltevorrichtung ist geeignet für den Einsatz in einem Kraftfahrzeug, da die Anpassung der Haltevorrichtung an verschiedene elektronische Geräte ohne Veränderung der in und an der Basiseinrichtung befindlichen elektrischen Verbindungselemente vorgenommen werden kann und somit sozusagen der elektrische Teil der Haltevorrichtung fest im Fahrzeug verbleiben kann.

Die vorliegende Erfindung umfasst weiterhin eine Aufnahmeeinrichtung (AE) gemäß Anspruch 15, die zur Befestigung eines elektronischen Geräts mit einem elektrischen Geräte-Verbindungselement an einer Basiseinrichtung (BE) mit einem in dieser integrierten und von der Aufnahmeeinrichtung (AE) unabhängigen elektrischen Verbindungselement (ST1) ausgebildet ist,
wobei die Aufnahmeeinrichtung
- für das elektronische Gerät individualisiert ist,
- Befestigungsmittel (BM1, BM2) zum Herstellen einer lösbaren mechanischen Verbindung mit der Basiseinrichtung (BE) umfasst, und
- eine Aussparung für das elektrische Verbindungselement (ST1) aufweist und
wobei die Aufnahmeeinrichtung und deren Aussparung weiterhin derart ausgebildet sind, dass das elektrische Geräte-Verbindungselement des elektronischen Geräts unmittelbar mit dem elektrischen Verbindungselement der Basiseinrichtung zum Herstellen einer elektrischen Verbindung zwischen dem elektronischen Gerät und einer elektrischen Einrichtung verbindbar oder verbunden ist.

Eine solche Aufnahmeeinrichtung weist den Vorteilen der im Vorausgegangenen beschriebene Haltevorrichtung entsprechende Vorteile auf. Sie ermöglicht die Halterung eines elektronischen Gerätes bei gleichzeitiger Verbindung des elektronischen Gerätes mit einer elektrischen Einrichtung. Zur Halterung des Geräts wird die Aufnahmeeinrichtung mit einer Basiseinrichtung verbunden, wobei dieselbe Basiseinrichtung mit einer Vielzahl unterschiedlicher Aufnahmeeinrichtungen und damit einer Vielzahl elektronischer Geräte benutzt werden kann.

Die dargestellte Aufnahmeeinrichtung löst ebenfalls das oben genannte Problem. Die Aufnahmeeinrichtung ist so ausgestaltet, dass eine elektrischen Verbindung zwischen elektronischem Gerät und der externen elektrischen Einrichtung durch das an der Basiseinrichtung befindliche elektrische Verbindungselement hergestellt werden kann. Da die mechanische Verbindung zwischen der an das elektronische Gerät angepassten Aufnahmeeinrichtung und der Basiseinrichtung lösbar ist, kann beim Wechsel des elektronischen Geräts eine an das neue Gerät angepasste Aufnahmeeinrichtung an der Basiseinrichtung angebracht werden, ohne die elektrischen Verbindungsmittel austauschen zu müssen. Die in der Aufnahmeeinrichtung vorgesehene Aussparung für das elektrische Verbindungselement stellt dabei den Zugang des elektronischen Geräts zum elektrischen Verbindungselement sicher. Daher ermöglicht die dargestellte Aufnahmevorrichtung ebenfalls eine einfache Anpassung einer Haltevorrichtung an unterschiedliche elektronische Geräte.

Die Aufnahmeeinrichtung, das elektronische Gerät, die Basiseinrichtung und die Befestigungsmittel können dabei wie im vorstehenden Text beschrieben vorteilhaft ausgestaltet sein.

Die vorliegende Erfindung umfasst weiterhin eine Basiseinrichtung gemäß Anspruch 16 für ein elektronisches Gerät mit einem elektrischen Geräte-Verbindungselement, umfassend
- ein in der Basiseinheit integriertes elektrisches Verbindungselement zur unmittelbaren Verbindung mit dem elektrischen Geräte-Verbindungselement des elektronischen Geräts zum Herstellen einer elektrischen Verbindung zwi schen dem elektronischen Gerät und einer elektrischen Einrichtung,
- Befestigungsmitteln zum Herstellen einer lösbaren mechanischen Verbindung zwischen der Basiseinrichtung und einer für das elektronische Gerät individualisierten Aufnahmeeinrichtung, wobei
- das elektrische Verbindungselement unabhängig von der Aufnahmeeinrichtung ist.

Die erfindungsgemäße Basiseinrichtung ist mit verschiedenen, für unterschiedliche elektronische Geräte individualisieren Aufnahmeeinrichtungen verbindbar und kann damit einfach an verschiedene elektronische Geräte angepasst werden. Über das an der Basiseinrichtung angebrachte elektrische Verbindungselement kann eine elektrische Verbindung zwischen dem elektronischen Gerät und der elektrischen Einrichtung hergestellt werden. Da das elektrische Verbindungselement unabhängig von der Aufnahmeeinrichtung ist, können beim Wechsel des elektronischen Geräts die für das jeweilige Gerät individualisierten Aufnahmevorrichtungen ausgetauscht werden, ohne aufwändig das elektrische Verbindungselemente austauschen zu müssen. Daher löst auch diese Basiseinrichtung das oben genannte Problem.

Auch hier können Basiseinrichtungen, elektrisches Verbindungselement, Befestigungsmittel und Aufnahmeeinrichtung wie im vorstehenden Text beschrieben vorteilhaft ausgestaltet sein.

Weitere bevorzugte Ausführungsformen sind in den Unteransprüchen enthalten.

Im Folgenden wird die Erfindung beispielhaft mit Bezug auf die beiliegenden Figuren erläutert. Es zeigen:
- Fig. 1: den modularen Aufbau einer erfindungsgemäßen Kfz-Halterung für ein mobiles Kommunikationsendgerät.
- Fig. 2: eine Einzeldarstellung in Rückansicht der erfindungsgemäßen Aufnahmevorrichtung des in Figur 1 dargestellten Kfz-Halters.
- Fig. 3: Darstellung der in Figur 2 gezeigten Aufnahmevorrichtung mit zusätzlich angebrachtem Antennenadapterkabel.
- Fig. 4: der in Figur 1 modular dargestellte Kfz-Halter in zusammengebauter Weise in Frontansicht.
- Fig. 5: der in Figur 1 modular dargestellte Kfz-Halter in zusammengebauter Weise in Rückansicht.

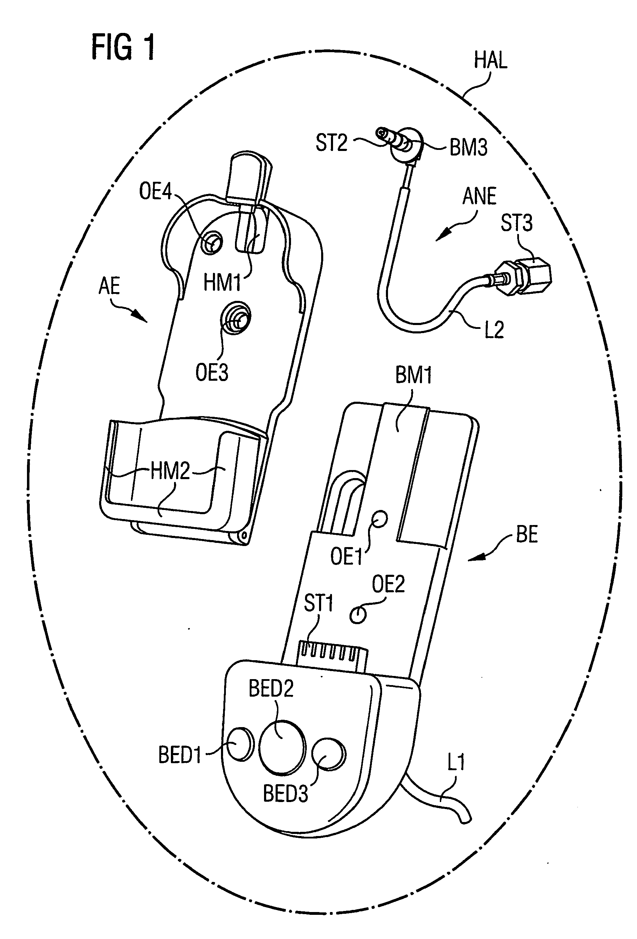

Fig. 1 stellt die Einzelmodule einer erfindungsgemäßen Haltevorrichtung HAL zur Halterung eines Mobiltelefons in einem Kraftfahrzeug dar. Dabei ist die Aufnahmeeinrichtung AE zur Aufnahme des Mobiltelefons vorgesehen. Dieses wird durch eine Klammer HM1 und Vorsprünge HM2 in der vorgesehenen Halteposition gehalten. Durch eine Öffnung OE3 kann die Aufnahmeeinrichtung AE beispielsweise mit einer Schraube an einer Basiseinheit BE fixiert werden. Eine Öffnung OE4 dient zur Aufnahme eines externen Antennensteckers ST2, welcher mit Hilfe einer Raste BM3 in der Öffnung OE4 fixiert werden kann.

Der erwähnte Antennenstecker ST2 ist Teil eines ebenfalls in Figur 1 dargestellten Antennenadapterkabel ANE, mit welchem das Mobiltelefon über den Stecker ST2, eine Leitung L2 und einen weiteren Stecker ST3 mit der Antenneneinrichtung des Kraftfahrzeugs verbunden werden kann.

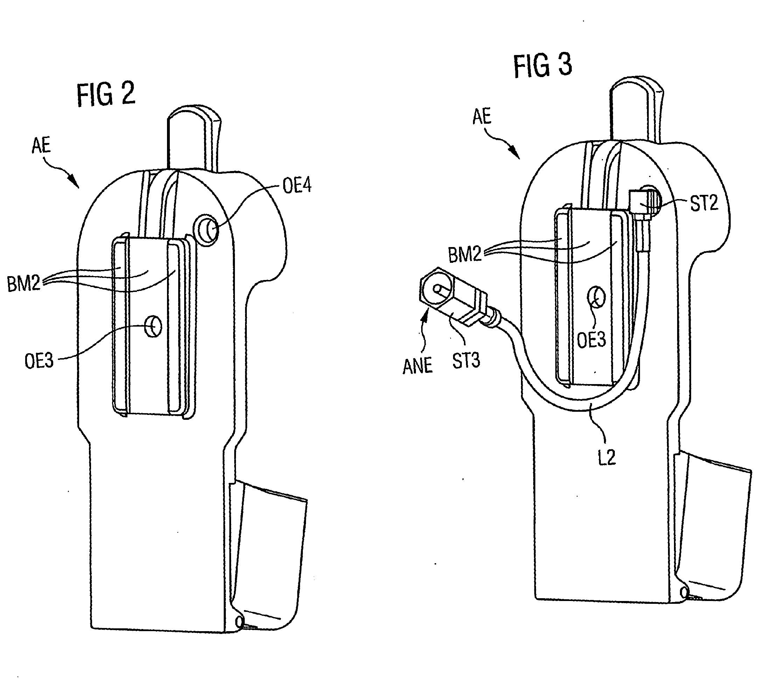

Weiterhin ist in Figur 1 die zugehörige Basiseinrichtung BE dargestellt. Diese umfasst als elektrisches Verbindungselement einen Stecker ST1, mit welchem das Mobiltelefon über eine Leitung L1 mit einem externen Kfz-Modul und/oder einer Stromversorgungseinrichtung verbunden werden kann. Weiterhin umfasst die Basiseinrichtung BE Bedienelemente BED1, BED2, BED3. Mit dem mittleren Bedienelement BED2 kann ein ankommender Anruf angenommen werden. Mit den Bedienelementen BED1 beziehungsweise BED3 kann die Lautstärke der externen Freisprecheinrichtung des Mobiltelefons lauter respektive leiser gestellt werden. Durch Öffnungen OE1 und OE2 kann die Basiseinrichtung BE beispielsweise mit zwei Schrauben im Kraftfahrzeug als Träger befestigt werden. Über einen T-förmigen, länglichen Vorsprung BM1 und eine entsprechend komplementär ausgeformte Nut BM2 in der Aufnahmeeinrichtung AE (s. Figuren 2 und 3) kann die Basiseinrichtung BE mit der Aufnahmeeinrichtung AE verbunden werden.

Figur 2 stellt eine Rückansicht der in Figur 1 dargestellten Aufnahmeeinrichtung AE dar. Außer den Öffnungen OE3, OE4 zur Fixierung der Aufnahmeeinrichtung AE an der Basiseinrichtung BE und zur Aufnahme des Antennensteckers ST2, ist eine Nut BM2 zur Aufnahme des Vorsprungs BM1 der Basiseinrichtung BE (s. Figur 1) dargestellt. Soll die Aufnahmeeinrichtung AE mit der Basiseinrichtung BE verbunden werden, so wird die Nut BM2 der Aufnahmeeinrichtung AE über den Vorsprung BM1 (s. Fig. 1) der Basiseinrichtung geschoben und die Aufnahmeeinrichtung AE so mechanisch an der Basiseinrichtung BE fixiert. Der Vorsprung BM1 und die Nut BM2 sind dabei so ausgebildet, dass die durch sie bewirkte mechanische Verbindung bei normalem Gebrauch der erfindungsgemäßen Haltevorrichtung HAL ausreicht, um Basiseinrichtung BE und Aufnahmeeinrichtung AE relativ zueinander zu fixieren. Soll die Aufnahmeeinrichtung AE zusätzlich an der Basiseinrichtung BE gesichert werden, kann dies durch Verwendung einer Sicherungsschraube durch die Öffnung OE3 erreicht werden.

In Figur 3 ist wie in Figur 2 die Rückansicht der Aufnahmeeinrichtung AE gezeigt, wobei der Stecker ST2 des Antennenadapters ANE in die entsprechende Öffnung OE4 (s. Fig. 2) eingebracht und mittels der Raste BM3 (s. Figur 1) arretiert ist.

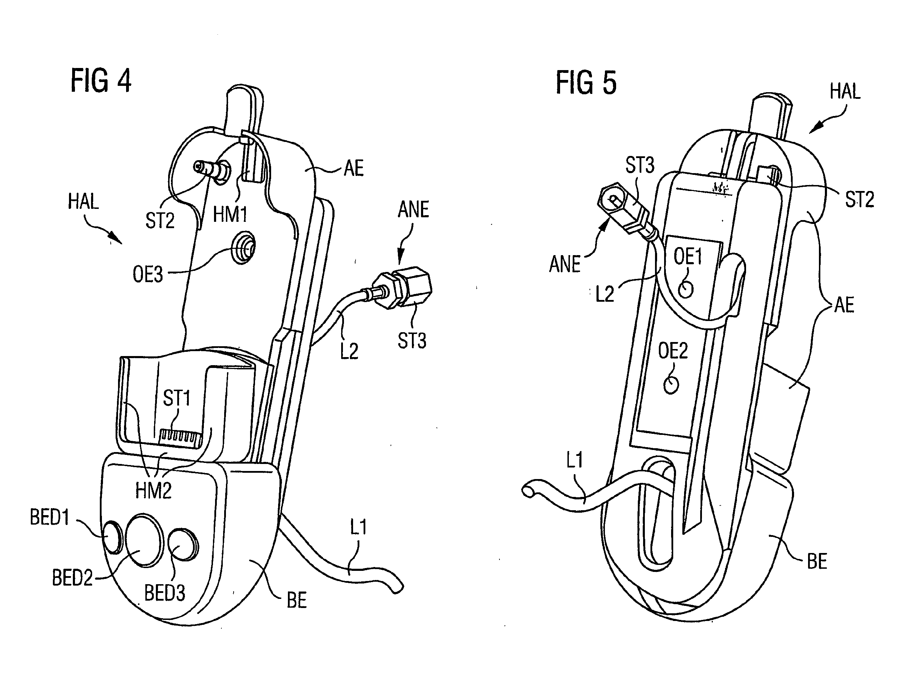

Die Figuren 4 und 5 stellen die erfindungsgemäße Haltevorrichtung HAL in zusammengebautem Zustand in Vor- und Rückansicht dar. In Figur 4 ist der durch eine entsprechende Öffnung der Aufnahmeeinheit AE ragende Stecker ST1 der Basiseinrichtung BE zu sehen. Beim Einbringen des Mobiltelefons in den Halter HAL wird dieses erst hinter die Vorsprüngen HM2 eingeführt und das unten am Mobiltelefon befindliche SteckerGegenstück auf den Stecker ST1 aufgeschoben. Dann wird das Mobiltelefon nach hinten in die Klammer HM1 gedrückt, wobei automatisch die hinten am Mobiltelefon befindliche Antennenausgangsbuchse mit dem Antennenstecker ST2 verbunden wird. Danach ist das Mobiltelefon automatisch über den Antennenadapter ANE und den zugehörigen Stecker ST3 sowie über die Leitung L1 mit der im Auto befindlichen Antenne und dem im Auto befindlichen Kfz-Modul verbunden.

Soll das Mobiltelefon aus dem Halter HAL entnommen werden, geht man in der umgekehrten Reihenfolge wie oben beschrieben vor.

Soll ein anderes Mobiltelefon im selben Kraftfahrzeug verwendet werden, so wird, gegebenenfalls nach Lösen der Sicherungsschraube durch die Öffnung OE3, die Aufnahmeeinheit AE von der Basiseinheit BE herunter geschoben, und der Antennenstecker ST2 entfernt. Dann wird eine dem neuen Mobiltelefon angepasste Aufnahmeeinheit AE ausgewählt, der Antennenstecker ST2 in eine in der neuen Aufnahmeeinheit AE entsprechend vorgesehene Öffnung OE4 eingebracht und die neue Aufnahmeeinheit AE mit der Nut BM2 auf den Vorsprung BM1 der Basiseinheit aufgeschoben. Die so umgebaute Haltevorrichtung HAL kann dann sofort mit dem neuen Mobiltelefon verwendet werden, ohne die im Kraftfahrzeug installierten entsprechenden Einrichtung verändern zu müssen. Sind die Steckverbindungen beim alten und beim neuen Mobiltelefon verschieden ausgebildet, so muss unter Umständen ein Adapterstück auf einen der Stecker ST1 oder ST2, oder beide, aufgebracht werden. Dieses Adapterstück kann entweder ein gesondertes Teil sein, oder mit der neuen Aufnahmeeinrichtung AE verbunden sein. Unbeschadet davon verbleibt der Vorteil, dass die elektrische Installation an Basiseinheit BE und Fahrzeug beim Wechsel des Mobiltelefons unverändert bleiben kann.

Die vorliegende Erfindung beschreibt eine Haltevorrichtung für ein elektronisches Gerät, sowie eine für das elektronische Gerät individualisierten Aufnahmeeinrichtung und eine Basiseinrichtung, welche ein von der Aufnahmeeinrichtung unabhängiges elektrisches Verbindungselement zum Herstellen einer elektrischen Verbindung zwischen dem elektronischen Gerät und einer externen elektrischen Einrichtung aufweist. Mit Befestigungsmitteln kann die Aufnahmeeinrichtung an der Basiseinrichtung befestigt werden, was eine Haltevorrichtung ergibt, die einfach an verschiedene elektronische Geräte angepasst werden kann, ohne in und an der Basiseinrichtung angebrachte elektrische Verbindungselemente verändern zu müssen. Die dargestellte Haltevorrichtung, Aufnahmeeinrichtung und Basiseinrichtung basieren auf dem modularen Grundkonzept, nachdem die Teile der Haltevorrichtung (Module), die zur mechanischen Fixierung an das elektronische Gerät angepasst sein müssen unabhängig von denjenigen sind, die die Herstellung einer elektrischen Verbindung des elektronischen Geräts mit einer externen elektrischen Einrichtung ermöglichen.

## Patentansprüche

1. Haltevorrichtung (HAL) für ein elektronisches Gerät mit einem elektrischen Geräte-Verbindungselement, umfassend
- eine für das elektronischen Gerät individualisierte Aufnahmeeinrichtung (AE),
- eine Basiseinrichtung (BE) mit einem in dieser integrierten und von der Aufnahmeeinrichtung unabhängigen elektrischen Verbindungselement (ST1) zur unmittelbaren Verbindung mit dem elektrischen Geräte-Verbindungselement des elektronischen Geräts zum Herstellen einer elektrischen Verbindung zwischen dem elektronischen Gerät und einer elektrischen Einrichtung,
- Befestigungsmittel (BM1, BM2) zum Herstellen einer lösbaren mechanischen Verbindung zwischen der Basiseinrichtung (BE) und der Aufnahmeeinrichtung (AE).

2. Haltevorrichtung (HAL) nach Anspruch 1,
bei der die Befestigungsmittel (BM1, BM2) das elektrische Verbindungselement (ST1) derart fixieren, dass für das elektronische Gerät beim Erreichen einer vorbestimmten Halteposition eine elektrische Verbindung herbeigeführt ist.

3. Haltevorrichtung (HAL) nach einem der Ansprüche 1 bis 2,
**dadurch gekennzeichnet,**
**dass** die Befestigungsmittel (BM1, BM2) mechanische Mittel, wie zum Beispiel Schrauben, Rasten, Nuten, Verzahnungen oder Kombinationen davon, umfassen.

4. Haltevorrichtung (HAL) nach einem der Ansprüche 1 bis 3,
**dadurch gekennzeichnet,**
**dass** die Aufnahmeeinrichtung (AE) zumindest abschnittsweise eine Form aufweist, die komplementär zur äußeren Form zumindest eines Bereichs des elektronischen Geräts ist.

5. Haltevorrichtung (HAL) nach einem der Ansprüche 1 bis 4,
**dadurch gekennzeichnet,**
**dass** die Basiseinrichtung (BE) Mittel zur Bedienung (Bed1, Bed2, Bed3) des elektronischen Geräts umfasst.

6. Haltevorrichtung (HAL) nach einem der Ansprüche 1 bis 5,
**gekennzeichnet durch**,
einen Adapter zum Herstellen der elektrischen Verbindung zwischen dem elektronischen Gerät und dem elektrischen Verbindungselement (ST1).

7. Haltevorrichtung (HAL) nach einem der Ansprüche 1 bis 6,
**dadurch gekennzeichnet,**
**dass** die elektrische Einrichtung eine Steuereinrichtung umfasst.

8. Haltevorrichtung (HAL) nach einem der Ansprüche 1 bis 7,
**dadurch gekennzeichnet,**
**dass** die elektrische Einrichtung eine Stromversorgungseinrichtung umfasst.

9. Haltevorrichtung (HAL) nach einem der Ansprüche 1 bis 8,
**dadurch gekennzeichnet,**
**dass** das elektronische Gerät eine Datenverarbeitungseinrichtung oder ein Ein- und/oder Ausgabemodul einer Datenverarbeitungseinrichtung ist.

10. Haltevorrichtung (HAL) nach einem der Ansprüche 1 bis 9,
**dadurch gekennzeichnet,**
**dass** das elektronische Gerät zumindest einen Teil eines mobilen Telekommunikationsendgeräts umfasst.

11. Haltevorrichtung (HAL) nach Anspruch 10,
**dadurch gekennzeichnet,**
**dass** die elektrische Einrichtung eine Antenneneinrichtung umfasst.

12. Haltevorrichtung nach Anspruch 11,
**dadurch gekennzeichnet,**
**dass** die Haltevorrichtung ein zweites elektrisches Verbindungselement (ST2) zum Herstellen einer elektrischen Verbindung zwischen dem elektronischen Gerät und der Antenneneinrichtung umfasst.

13. Haltevorrichtung (HAL) nach einem der Ansprüche 1 bis 12,
**dadurch gekennzeichnet,**
**dass** die Basiseinrichtung (BE) Mittel zur Fixierung an einem Träger umfasst.

14. Haltevorrichtung (HAL) nach Anspruch 13, **dadurch gekennzeichnet, dass** der Träger Teil eines Kraftfahrzeugs ist.

15. Aufnahmeeinrichtung (AE), die zur Befestigung eines elektronischen Geräts mit einem elektrischen Geräte-Verbindungselement an einer Basiseinrichtung (BE) mit einem in dieser integrierten und von der Aufnahmeeinrichtung (AE) unabhängigen elektrischen Verbindungselement (ST1) ausgebildet ist,
wobei die Aufnahmeeinrichtung
- für das elektronische Gerät individualisiert ist,
- Befestigungsmittel (BM1, BM2) zum Herstellen einer lösbaren mechanischen Verbindung mit der Basiseinrichtung (BE) umfasst, und
- eine Aussparung in Form einer Öffnung für das elektrische Verbindungselement (ST1) aufweist, so daß dieses durch die Öffnung durchragen kann, und
wobei die Aufnahmeeinrichtung und deren Öffnung weiterhin derart ausgebildet sind, dass das elektrische Geräte-Verbindungselement des elektronischen Geräts unmit-telbar mit dem elektrischen Verbindungselement (ST1) der Basiseinrichtung zum Herstellen einer elektrischen Verbindung zwischen dem elektronischen Gerät und einer elektrischen Einrichtung verbindbar oder verbunden ist.

16. Basiseinrichtung (BE) für ein elektronisches Gerät mit einem elektrischen Geräte-Verbindungselement, umfassend
- ein in der Basiseinrichtung integriertes elektrisches Verbindungselement (ST1) zur unmittelbaren Verbindung mit dem elektrischen Geräte-Verbindungselement des elektronischen Geräts zum Herstellen einer elektrischen Verbindung zwischen dem elektronischen Gerät und einer elektrischen Versorgungseinrichtung,
- Befestigungsmittel (BM1, BM2) zum Herstellen einer lösbaren mechanischen Verbindung zwischen der Basiseinrichtung (BE) und einer für das elektronische Gerät individualisierten Aufnahmeeinrichtung (AE), wobei
- das elektrische Verbindungselement (ST1) unabhängig von der Aufnahmeeinrichtung (AE) ist.

## Claims

1. A holder (HAL) for an electronic device having an electrical device connection element, comprising
- a receptacle (AE) configured specifically for the electronic device,
- a base device (BE) having an electrical connection element (ST1), which is integrated herein and is independent of the receptacle, for direct connection to the electrical device connection element of the electronic device for establishing an electrical connection between the electronic device and an electrical unit,
- fixing means (BM1, BM2) for establishing a detachable mechanical connection between the base device (BE) and the receptacle (AE).

2. The holder (HAL) according to claim 1,
in which the fixing means (BM1, BM2) fix the electrical connection element (ST1) in such a way that an electrical connection is made for the electronic device on reaching a defined retaining position.

3. The holder (HAL) according to one of the claims 1 to 2,
**characterised in that**
the fixing means (BM1, BM2) comprise mechanical means such as screws, catches, channels, keying or combinations thereof.

4. The holder (HAL) according to one of the claims 1 to 3,
**characterised in that**
the receptacle (AE) has, at least in parts, a complementary shape to the external shape of at least one area of the electronic device.

5. The holder (HAL) according to one of the claims 1 to 4,
**characterised in that**
the base device (BE) comprises means (Bed1, Bed2, Bed3) for operating the electronic device.

6. The holder (HAL) according to one of the claims 1 to 5,
**characterised by**
an adapter for establishing the electrical connection between the electronic device and the electrical connection element (ST1).

7. The holder (HAL) according to one of the claims 1 to 6,
**characterised in that**
the electrical unit comprises a control unit.

8. The holder (HAL) according to one of the claims 1 to 7,
**characterised in that**
the electrical unit comprises a power supply unit.

9. The holder (HAL) according to one of the claims 1 to 8,
**characterised in that**
the electronic device is a data processing unit or an input and/or output module of a data processing unit.

10. The holder (HAL) according to one of the claims 1 to 9,
**characterised in that**
the electronic device comprises at least part of a mobile telecommunications terminal device.

11. The holder (HAL) according to claim 10,
**characterised in that**
the electrical unit comprises an aerial unit.

12. The holder (HAL) according to claim 11,
**characterised in that**
the holder comprises a second electrical connection element (ST2) for establishing an electrical connection between the electronic device and the aerial unit.

13. The holder (HAL) according to one of the claims 1 to 12,
**characterised in that**
the base device (BE) comprises means for fixing to a support.

14. The holder (HAL) according to claim 13,
**characterised in that**
the support is part of a vehicle.

15. A receptacle (AE) for fixing an electronic device having an electrical device connection element to a base device (BE) having an electrical connection element (ST1), which is integrated herein and is independent of the receptacle (AE) said receptacle
- being configured specifically for the electronic device, and
- comprising fixing means (BM1, BM2) for establishing a detachable mechanical connection to a base device (BE), and
- having a recess in the shape of an opening for the electrical connection element (ST1), so that said electrical connection element can protrude through the opening, and
with the receptacle and its opening being further configured such that the electrical device connection element of the electronic device can be or is directly connected to the electrical connection element (ST1) of the base device for establishing an electrical connection between the electronic device and an electrical unit.

16. A base device (BE) for an electronic device having an electrical device connection element, comprising
- an electrical connection element (ST1) integrated in the base device for direct connection to the electrical device connection element of the electronic device for establishing an electrical connection between the electronic device and an electrical supply unit,
- fixing means (BM1, BM2) for establishing a detachable mechanical connection between the base device (BE) and a receptacle (AE) configured specifically for the electronic device, with
- the electrical connection element (ST1) being independent of the receptacle (AE).

## Revendications

1. Dispositif de support (HAL) pour un appareil électronique avec un élément de connexion électrique pour appareils, comprenant
- un dispositif de logement (AE) individualisé pour l'appareil électronique,
- un dispositif de base (BE) avec un élément de connexion électrique (ST1) intégré dans celui-ci et indépendant du dispositif de logement pour connexion directe à l'élément de connexion électrique pour appareils de l'appareil électronique pour établir une connexion électrique entre l'appareil électronique et un équipement électrique,
- des moyens de fixation (BM1, BM2) pour établir un assemblage mécanique amovible entre le dispositif de base (BE) et le dispositif de logement (AE).

2. Dispositif de support (HAL) selon la revendication 1,
dans lequel les moyens de fixation (BM1, BM2) fixent l'élément de connexion électrique (ST1) de manière telle qu'une connexion électrique est provoquée pour l'appareil électronique à l'obtention d'une position de support prédéterminée.

3. Dispositif de support (HAL) selon l'une des revendications 1 à 2,
**caractérisé en ce que**
les moyens de fixation (BM1, BM2) comprennent des moyens mécaniques tels que, par exemple, des vis, des crans, des rainures, des engrenages ou des combinaisons de ces éléments.

4. Dispositif de support (HAL) selon l'une des revendications 1 à 3,
**caractérisé en ce que**
le dispositif de logement (AE) présente, au moins en partie, une forme qui est complémentaire de la forme extérieure d'au moins une partie de l'appareil électronique.

5. Dispositif de support (HAL) selon l'une des revendications 1 à 4,
**caractérisé en ce que**
le dispositif de base (BE) comprend des moyens de commande (Bed1, Bed2, Bed3) de l'appareil électronique.

6. Dispositif de support (HAL) selon l'une des revendications 1 à 5,
**caractérisé par**
un adaptateur pour établir la connexion électrique entre l'appareil électronique et l'élément de connexion électrique (ST1).

7. Dispositif de support (HAL) selon l'une des revendications 1 à 6,
**caractérisé en ce que**
l'équipement électrique comprend un dispositif de commande.

8. Dispositif de support (HAL) selon l'une des revendications 1 à 7,
**caractérisé en ce que**
l'équipement électrique comprend un dispositif d'alimentation en courant.

9. Dispositif de support (HAL) selon l'une des revendications 1 à 8,
**caractérisé en ce que**
l'appareil électronique est un dispositif de traitement de données ou un module d'entrée et/ou de sortie d'un dispositif de traitement de données.

10. Dispositif de support (HAL) selon l'une des revendications 1 à 9,
**caractérisé en ce que**
l'appareil électronique comprend au moins une partie d'un terminal de télécommunication mobile.

11. Dispositif de support (HAL) selon la revendication 10,
**caractérisé en ce que**
l'équipement électrique comprend un dispositif d'antenne.

12. Dispositif de support (HAL) selon la revendication 11,
**caractérisé en ce que**
le dispositif de support comprend un deuxième élément de connexion électrique (ST2) pour établir une connexion électrique entre l'appareil électronique et le dispositif d'antenne.

13. Dispositif de support (HAL) selon l'une des revendications 1 à 12,
**caractérisé en ce que**
le dispositif de base (BE) comprend des moyens de fixation à un support.

14. Dispositif de support (HAL) selon la revendication 13,
**caractérisé en ce que**
le support est une partie d'un véhicule automobile.

15. Dispositif de logement (AE) réalisé pour fixer un appareil électronique avec un élément de connexion électrique pour appareils à un dispositif de base (BE) avec un élément de connexion électrique (ST1) intégré dans celui-ci et indépendant du dispositif de logement (AE), le dispositif de logement
- étant individualisé pour l'appareil électronique,
- comprenant des moyens de fixation (BM1, BM2) pour établir un assemblage mécanique amovible avec le dispositif de base (BE) et
- comportant un évidement en forme d'ouverture pour l'élément de connexion électrique (ST1) de sorte que celui-ci peut dépasser de l'ouverture et
le dispositif de logement et son ouverture étant en outre réalisés de manière telle que l'élément de connexion électrique pour appareils de l'appareil électronique est connecté ou peut être connecté directement à l'élément de connexion électrique (ST1) du dispositif de base pour établir une connexion électrique entre l'appareil électronique et un équipement électrique.

16. Dispositif de base (BE) pour un appareil électronique avec un élément de connexion électrique pour appareils, comprenant
- un élément de connexion électrique (ST1) intégré dans l'unité de base pour connexion directe à l'élément de connexion électrique pour appareils de l'appareil électronique pour établir une connexion électrique entre l'appareil électronique et un équipement d'alimentation électrique,
- des moyens de fixation (BM1, BM2) pour établir un assemblage mécanique amovible entre le dispositif de base (BE) et un dispositif de logement individualisé (AE) pour l'appareil électronique,
- l'élément de connexion électrique (ST1) étant indépendant du dispositif de logement (AE).
